# EUROPEAN PATENT APPLICATION

(11) **EP 1 126 678 A1**
(43) Date of publication of application: **22.08.2001**
(21) Application number: 00301203.6
(22) Date of filing: 16.02.2000
(51) Int. Cl.: H04L 29/06, H04L 29/12

(54) **Privacy for mobile terminal in telecommunications network**

(71) Applicant: LUCENT TECHNOLOGIES INC., Murray Hill, New Jersey 07974-0636 (US)
(72) Inventor: Casati, Alessio, Wootton Bassett, Wiltshire SN4 7SH (GB)
(74) Representative: Williams, David John

(57) **Abstract**

In an internet network running the protocol IPv6, the location of a mobile node MN is concealed by the provision of an intermediate node IN; the MN sends to the IN the home address of the mobile node and the visitor identity of the calling mobile, and the correspondent node address option of the called mobile as extension headers in the IPv6 header. The IN uses the extension header information as source and destination addresses on packets routed from the MN node to the CN node.

## Description

This invention relates to a method of providing privacy for a mobile terminal, such as a mobile telephone, in a network such as an internet network, in the sense that its topological location is not revealed.

In the current Internet Protocol (IP) network, every mobile user is provided with a globally unique address. When a user is in an area other than a home location, identification of the actual location may be revealed, for example by a distinctive prefix, associated with the address assigned in the visited location. In some cases this may be undesirable.

It is an object of the invention to provide a method of communicating with mobile users in such a way that the actual location of the mobile is not revealed.

According to the invention, a method of providing communications between a mobile node, which has a Home Address, which is attached to a telecommunications network as a visitor, and which has a visitor identity, and a correspondent node, characterized by the steps of :-
providing an intermediate node, and routeing messages between the mobile node and correspondent nodes through the intermediate node, the arrangement being such that
the mobile node sends to the intermediate node the visitor identity of the mobile node, the Home Address of the mobile, and the correspondent node address;
the intermediate node stores information relating to the Home Address of the mobile node and the visitor identity of the mobile node and
the intermediate node sends to the correspondent node the Home Address of the mobile node.

The invention will be described by way of example only with reference to the accompanying drawings in which:-
Figure 1 illustrates traditional and inventive routes from a mobile user in a visitor network to another user in the Internet Protocol;
Figure 2 illustrates traditional and inventive routes for a reply message;
Figure 3 illustrates a standard header for IPv6;
Figure 4 illustrates a Home Address optional extension in IPv6; and
Figure 5 illustrates a Destination Address as an optional extension in IPv6.

The internet protocol known as IPv6 is currently used in an experimental, network, but is not yet in commercial, use. The invention will be described with reference to use of the IPv6 protocol.

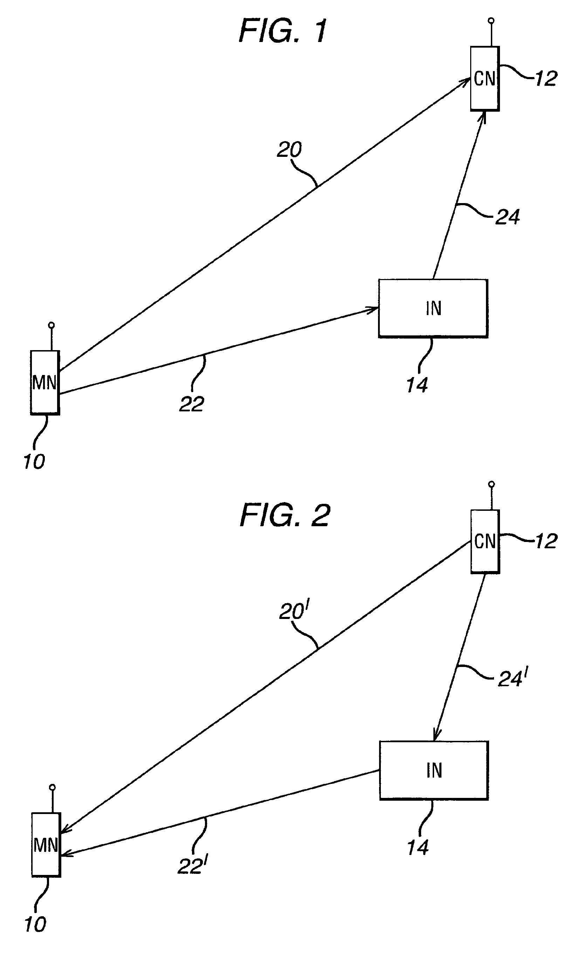

Figure 1 illustrates a Mobile Node (MN) 10 in a visited location in a telecommunications network, ie not in its home location. The user 10 is in correspondence with a second use , Correspondent Node CN 12.

In a conventional arrangement, when the MN 10 is in a visited network, it is allocated a Care of Address (CoA) by the visited network. When the MN 10 enters into correspondence with CN 12, in current arrangements, the direct route 20 is used. The packets contain as source address the CoA of the MN 10, and the destination is the address of the CN 12.

The advantage of this arrangement is that route optimization is possible, e.g. the triangular routeing introduced by the need to go through a Home Agent is avoided. The disadvantage is that the CN 12 knows exactly in which network the mobile 10 is located.

Figure 1 shows an alternative route according to the invention. An additional node, Intermediate Node (IN) 14, is provided. The packets from MN 10 pass along route 22, 24 to CN 12. From MN 10 to IN 14, the source address is given as the CoA of the MN 10 as before and the destination address is that of IN 14. Each packet now contains additional information, i.e. a MN home address destination option, and the CN 12 address.

The IN 14 passes the packets forward by route 24, but strips out the CoA and the IN address information from the packet header and replaces them with, respectively, the MN Home Address and the CN address. The forwarded packet therefore comprises the MN Home address destination as source and the CN address as the destination.

The actual location of mobile 10 is now concealed from CN 12.

The IN 14 stores a mapping between the MN home address and the MN CoA.

For return packets, reference to Figure 2 shows that in the conventional direct route 20', the source is the CN address and the destination is the Care of Address of the MN 10.

In the inventive route 24', 22' the CN address is the source and the MN home address is the destination. The IN 20 recognizes the MN home address which is stored and mapped with respect to outgoing packets from the mobile 10, and passes packets from the CN 14 to the MN CoA; for route 24', the source is the address of IN 20 and the destination is the MN CoA, and the home address of the CN node 12 is encoded as a destination option.

The packet headers to achieve this routeing will now be described.

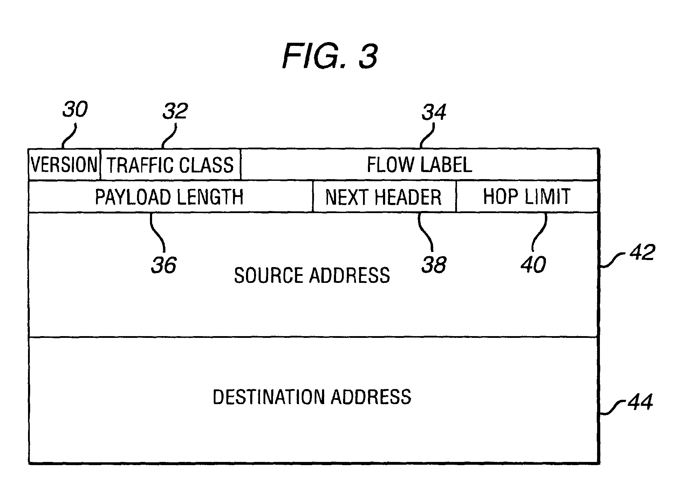

Figure 3 shows an IPv6 header, defined in Internet Engineering Task Force Requests For Comments (IETF RFC) 2460 as a fixed length header. The fields include version 30, traffic class 32, flow label 34, payload length 36, next header 38, and hop limit 40. A source address field 42 and a destination address 44 are provided.

In this arrangement, extension headers are possible, and an extension header mechanism has already been defined for IPv6. The extensions allow more information to be added to support further features and applications.

The arrangement is such that this optional internet-layer information is encoded as separate headers that may be placed between the IPv6 header and the upper layer header. Each of a small number of such extension headers is identified by a distinct Next Header value. An IPv6 packet may contain 0, 1 or more extension headers, each identified by the Next Header field 38 of the preceding header.

The Next Header field 38 is an 8-bit selector, and it identifies the type of header immediately following the IPv6 header. The Next Header 38 uses the same values as the IPv4 Protocol field, defined in RFC-1700 et seq. The value 59 in the Next Header field of an IPv6 header as any extension header indicates that there is nothing following that header, i.e. the last extension header has been sent.

The present invention utilizes the extension header mechanism to instruct the IN 14 to transmit the IPv6 header source and destination address, so that network layer de-coupling to user location is achieved. The mobile node MN 12 does not need to disclose any information about the topological location as it changes its point of attachment to the Internet.

When the MN 10 sends a packet to the CN 12, it uses the header extension to provide the information to the IN 14 as set out above, to allow correct routeing.

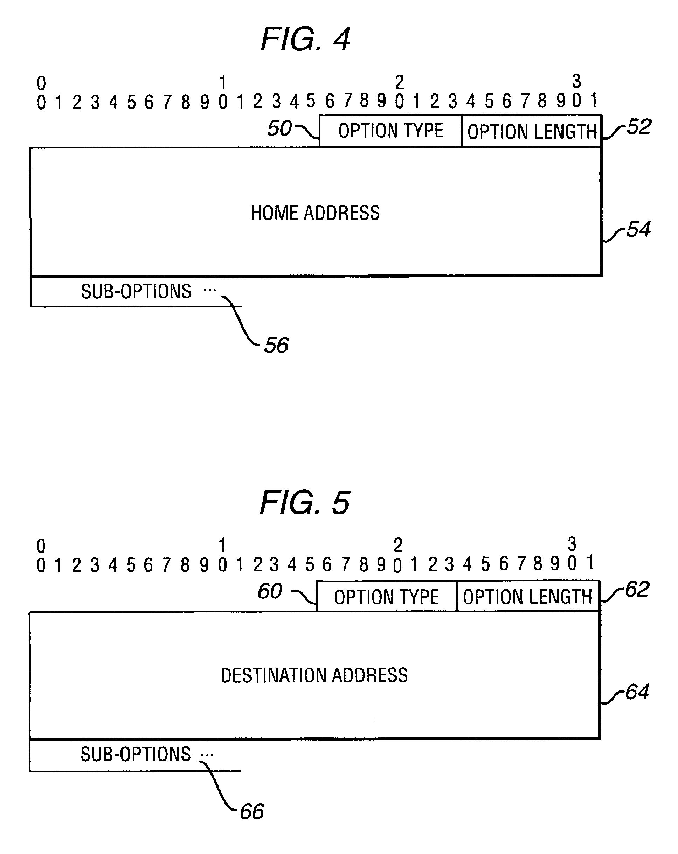

The Home Address option is illustrated in Figure 4a, encoded in type-length-value (TLV) format; the header comprises an option type field 50, an option length field 52, and the Home Address field 54 of the node of the mobile sending the packet. There are also sub option fields 56. The option length field 52 is an 8-bit unsigned integer. The length of the option, in octets, excludes the Option Type and Option Length fields 50, 52. The Option Length field 52 MNst be set to a value of 12 plus the total length of all the sub-options present, including the Sub-Option Type and Sub-Option Length fields.

The Home Address field 54 is the home address of the mobile sending the packet.

Figure 5 shows the Destination Address option header in TLV format. There are Option Type 60 an Option Length fields 62, a Destination Address 64 and a number of sub option fields 60.

The Option Length field 62 is an 8-bit unsigned integer. The length of the option, in octets, excluding the Option Type and Option Length fields. This field MNst be set to a value of 12 plus the total length of all sub-options present, including their Sub-Option Type and Sub-Option Length fields.

The Destination Address is the address of the node CN 12 which eventually receives the packet.

In the standard, at the date of writing, the Option Types 50, 60 and the Sub-Option Types 56, 66 are not defined.

Thus the inventive arrangement uses an existing feature of the protocol, the IPv6 header, to provide privacy for mobile users.

It is preferable to include some security to prevent another node from impersonating a MN at an Intermediate Node - any appropriate authentication and security system can be applied.

It will be appreciated that the visited network can be the home network of the mobile 10, but at a different point of attachment having a different address to the home address of the mobile 10. The visited network can also be a network of a different operator, or a network of a different country.

An additional application of the invention is that the IN 14 can build mapping tables of a number of mobile users who have instructed the IN 14 on their current locations. The IN 14 can then provide mobility support for the users.

A yet further application is that the IN 14 can be arranged to translate protocols from IPv4 to IPv6, as IPv6 comes into commercial use. The transition from one protocol to the other can therefore be managed.

## Claims

1. A method of providing communications between a mobile node MN, which has a Home Address, which is attached to a telecommunications network as a visitor, and which has a visitor identity, and a correspondent node CN, characterized by the steps of
providing an Intermediate Node IN, and routeing messages between the mobile and correspondent nodes through the intermediate node, the arrangement being such that:-
the mobile node sends to the intermediate node IN the visitor identity of the mobile node MN, the Home Address of the mobile node MN, and the destination address CN;
the intermediate node IN stores information relating to the Home Address of the mobile node MN and the visitor identity of the mobile node MN; and
the intermediate node IN sends to the correspondent node CN the Home Address of the mobile node.

2. A method according to Claim 1 in which the visitor identity of the mobile node MN is a Care of Address.

3. A method according to Claim 2 in which the network is a packet switched network and the Care of Address is supplied as the source address of packets sent by the mobile node MN.

4. A method according to any preceding Claim in which the network is the Internet operating the protocol IPv6.

5. A method according to Claim 4 in which extension headers in an IPv6 header associated with each packet carry the Home Address of the mobile node MN and the correspondent node CN address to the Intermediate node IN, and the IN uses the extension headers to provide source and destination headers in packets routed to the correspondent node CN .

6. A method according to Claim 5 in which the intermediate node IN recognizes reply packets from the correspondent CN by sensing the presence of the mobile node MN Home Address, the intermediate node then routeing reply packets to the mobile node MN.

7. A method according to Claim 6 further comprising the step of the intermediate node IN building mapping tables of a plurality of mobile users which have instructed the intermediate node IN on their current location, and providing mobility support for said users.

8. A method according to Claim 6 or Claim 7 further comprising the step of the intermediate node IN being arranged to translate from an IPv4 protocol in a packet to the IPv6 protocol.
